(19) Europäisches Patentamt
European Patent Office
Office européen des brevets

(11) Veröffentlichungsnummer : **0 447 785 B1**

(12) **EUROPÄISCHE PATENTSCHRIFT**

(45) Veröffentlichungstag der Patentschrift :
**17.08.94 Patentblatt 94/33**

(51) Int. Cl.[5] : **C08F 8/44**

(21) Anmeldenummer : **91101815.8**

(22) Anmeldetag : **09.02.91**

# (54) Polyacrylsäureester mit Ammoniumsalzgruppen.

(30) Priorität : **19.03.90 DE 4008761**

(43) Veröffentlichungstag der Anmeldung :
**25.09.91 Patentblatt 91/39**

(45) Bekanntmachung des Hinweises auf die Patenterteilung :
**17.08.94 Patentblatt 94/33**

(84) Benannte Vertragsstaaten :
**BE CH DE ES FR GB IT LI NL**

(56) Entgegenhaltungen :
**EP-A- 0 293 750**
**GB-A- 989 050**
**GB-A- 1 023 281**
**US-A- 2 843 573**
**US-A- 4 368 133**

(73) Patentinhaber : **Th. Goldschmidt AG**
**Goldschmidtstrasse 100**
**D-45127 Essen (DE)**

(72) Erfinder : **Esselborn, Eberhard**
**Pilotystrasse 21**
**W-4300 Essen 1 (DE)**
Erfinder : **Fock, Jürgen, Dr.**
**Mörsenbroicher Weg 114**
**W-4000 Düsseldorf 30 (DE)**
Erfinder : **Lammerting, Helmut**
**Schweerstrasse 11a**
**W-5812 Herbede (DE)**

EP 0 447 785 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyacrylsäureester mit Ammoniumsalzgruppen und deren Verwendung als kationaktive Tenside, insbesondere als Wirkstoffe in Metallhilfsmitteln.

Ammoniumsalze organischer Amine werden seit langem als kationaktive Netz- und Emulgiermittel verwendet. Sie können in der Textilindustrie als Antistatika und zur Verbesserung des Griffes von Textilien, in Garnpräparationen zur Verbesserung des Gleitvermögens und der Verarbeitungseigenschaften, wie etwa der Näheigenschaften, eingesetzt werden. Ammoniumsalze organischer Amine werden zur selektiven Oleophilierung bei der Flotation von Salzen, wie Alkalisalzen, und von Erzen, wie Zinkerzen, genutzt. Sie können in geeigneten Systemen als Korrosionsschutzmittel wirken und werden als Metallhilfsmittel, zum Beispiel zur Herstellung von Bohr- und Schneidflüssigkeiten und als grenzflächenaktive Mittel zum Umnetzen von nassen Metalloberflächen verwendet. Die Ammoniumsalze ausgewählter organischer Verbindungen eignen sich als Haftmittel für den Straßenbau, zum Anreiben und Flushen von Pigmenten.

Besonderes Interesse finden polymere Verbindungen, die eine Mehrzahl von Ammoniumsalzgruppen seitenständig (kammartig) gebunden enthalten, da diese Verbindungen dem jeweiligen Verwendungszweck optimal in bezug auf die Löslichkeit und die Anzahl der Ammoniumsalzgruppen im polymeren Molekül angepaßt werden können.

Zu den geeigneten polymeren Verbindungen, an welche seitenständig Ammoniumsalzgruppen gebunden sein können, gehören die Polyacrylsäureester, die durch Copolymerisation von Acrylsäureestern und Acrylsäureesterderivaten mit tertiären Aminogruppen, die nach der Polymerisation in die Ammoniumsalze überführt werden, erhalten werden können. Zusätzlich können weitere Monomere, wie Styrol, Methyl-, Ethyl-, Butyl-, Dodecyl(meth)acrylat, Vinylacetat, Vinylpropionat, N-Vinylpyrrolidon, Acrylamid, Acrylnitril, copolymerisiert werden.

Bei der radikalischen Copolymerisation der vorgenannten Monomeren entstehen Polymere mit einer sehr breiten Molekulargewichtsverteilung. Die Molekulargewichtsverteilungskurve verläuft somit relativ flach und weist überdies zwei oder mehr Maxima auf, die darauf hindeuten, daß das Polymerisationsprodukt verhältnismäßig heterogen ist. Man kann annehmen, daß der Grund hierfür in den erheblich vom Quotienten 1 abweichenden Copolymerisationsparametern der einzelnen Monomeren zu finden ist und insbesondere durch den Gehalt an tertiärem oder quaternärem Stickstoff bei den Comonomeren bedingt ist.

Dabei hat sich gezeigt, daß in den durch Copolymerisation erhaltenen Polymerisaten Anteile enthalten sind, die physiologisch bedenklich sind und auch toxische Eigenschaften haben können. Es ist dabei zu vermuten, daß diese unerwünschten Eigenschaften den niedermolekularen Anteilen des Polymerisates zuzuordnen sind. Eine Abtrennung dieser Anteile aus dem Polymerisat ist in wirtschaftlicher Weise nicht möglich. Für viele Einsatzzwecke ist aber die physiologische Unbedenklichkeit von Produkten zwingende Voraussetzung für ihre Verwendbarkeit. Es ist deshalb von besonderem Interesse, Polyacrylsäureester mit quaternären Ammoniumgruppen herzustellen, wobei die Polymerisate frei von physiologisch bedenklichen Bestandteilen sind.

Die Anwendung eines anionischen Polymerisationsverfahrens, wie es in der DE-OS 22 62 588 beschrieben ist, zur Herstellung von Acrylpolymeren mit einem Molekulargewicht von 500 bis 5000 stellt keine brauchbare Lösung der vorgenannten Aufgabe dar. Die Gefahr der Vergelung der Reaktionsprodukte ist hoch. Darüber hinaus ist die Überführung eines anionischen Polymerisationsverfahrens in den Betriebsmaßstab auch aus sicherheitstechnischen Gründen recht problematisch.

Der Erfindung liegt die Aufgabe zugrunde, Polyacrylsäureester mit quaternären Ammoniumsalzgruppen herzustellen, wobei die Polymerisate möglichst geringe Anteile an niedermolekularen Produkten enthalten und physiologisch unbedenklich sein sollen.

Es wurde gefunden, daß Polymerisate, welche nur geringe Anteile an niedermolekularen Produkten enthalten, durch Umesterung geeigneter Polyacrylsäureester mit einem Gemisch ausgewählter Aminoalkohole und langkettiger aliphatischer Alkohole erhalten werden können. Die dabei als Zwischenprodukte entstehenden Acrylsäureester mit tertiären Aminogruppen werden in einem zweiten Verfahrensschritt durch Salzbildung (Protonierung) mit organischen oder anorganischen physiologisch unbedenklichen Säuren in die gewünschten Polyacrylsäureester mit Ammoniumsalzgruppen überführt.

Gegenstand der Erfindung sind deshalb Polyacrylsäureester mit Ammoniumsalzgruppen, erhältlich durch Umesterung von durch radikalische Polymerisation erhaltenen Polyacrylsäurealkylestern, deren Alkylreste 1 bis 8 Kohlenstoffatome aufweisen, wobei bis zu 50 % der Acrylsäureester durch die entsprechenden Methacrylsäureester ersetzt sein können, mit

a) Verbindungen der allgemeinen Formel

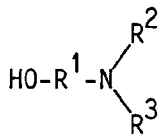 oder 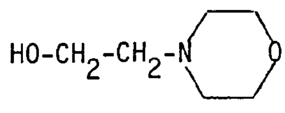

$R^1$ = zweiwertiger Rest der allgemeinen Formel

$-(CH_2)_q-$, 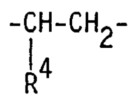 oder $-(C_nH_{2n}O)_m-C_pH_{2p}-$

| | |
|---|---|
| $R^4$ | = Alkylrest mit 1 bis 16 Kohlenstoffatomen, |
| q | = 2, 3 oder 4, |
| n | = 2, 3 oder 4, |
| m | = 1 bis 20, |
| p | = 2, 3 oder 4, |
| $R^2$, $R^3$ = | jeweils Alkylrest mit 1 bis 18 Kohlenstoffatomen, |

und

b) gesättigten oder ungesättigten aliphatischen Alkoholen mit 8 bis 22 Kohlenstoffatomen oder alkoxylierten Alkylphenolen mit 9 bis 27 Kohlenstoffatomen im Alkylphenolrest,

wobei das molare Verhältnis der Komponenten a) : b) 1 : 9 bis 9 : 1 beträgt, in solchen Mengen, daß 5 bis 70 % der Estergruppen umgeestert werden, in Gegenwart eines an sich bekannten Umesterungskatalysators, bei Temperaturen von 70 bis 140°C, gegebenenfalls in Gegenwart eines Lösungsmittels, und nachfolgende Salzbildung mit organischen Carbonsäuren mit 1 bis 6 Kohlenstoffatomen oder anorganischen Säuren.

$R^1$ ist ein zweiwertiger Rest der Formel

$-(CH_2)_q-$, 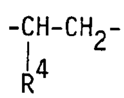 oder $-(C_nH_{2n}O)_m-C_pH_{2p}-$.

Beispiele solcher Reste sind $-(CH_2)_4-$;

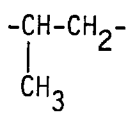 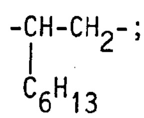

$-(CH_2)_2O(CH_2)_2-$; $-(CH_2)_3O(CH_2)_2-$; $-(CH_2)_2O(CH_2)_2O(CH_2)_3-$;

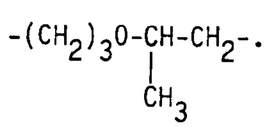

Besonders bevorzugt sind $-(CH_2)_q$-Reste sowie die Reste

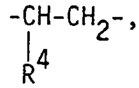

bei denen $R^4$ ein Methyl- oder Ethylrest ist. Bei den Etherresten sind solche bevorzugt, bei denen n und p einen

Wert von 2 oder 3 haben. m hat vorzugsweise einen Wert von 1 bis 10.

$R^2$ und $R^3$ sind jeweils Alkylreste mit 1 bis 18 Kohlenstoffatomen. Die Alkylreste können geradkettig oder verzweigt sein. Bevorzugt sind Alkylreste mit 1 bis 6 Kohlenstoffatomen. Insbesondere bevorzugt sind Alkylreste mit 1 bis 4 Kohlenstoffatomen, wie der Methyl-, Ethyl-, Propyl-, iso-Propyl, Butyl- und iso-Butylrest.

Innerhalb des polymeren Moleküls können die Reste und Indices verschiedene Bedeutung bzw. Werte annehmen. Hierdurch bedingt können im durchschnittlichen Polymerenmolekül die Indices auch gebrochene Zahlenwerte annehmen.

Die Komponente b) kann die Bedeutung eines gesättigten oder ungesättigten aliphatischen Alkohols mit 8 bis 22 Kohlenstoffatomen haben. Besonders bevorzugt sind Alkohole mit 10 bis 18 Kohlenstoffatomen, wobei auch Gemische von Alkoholen verschiedener Kettenlänge verwendet werden können. Beispiele geeigneter Alkohole sind der Octyl-, Decyl-, Dodecyl-, Hexadecyl-, Octadecylalkohol, Behenylalkohol, Oleylalkohol oder die synthetischen Alkohole mit der gewünschten Kohlenstoffanzahl. Ist die Komponente b) ein alkoxyliertes Alkylphenol, weist das Alkylphenol 9 bis 27 Kohlenstoffatome auf. Beispiele geeigneter alkoxylierter Alkylphenole sind die Ethoxylate von Alkylphenolen, wie Hexyl-, Octyl-, Nonyl-, Dodecyl- oder Dinonylphenol. Dabei sind an die Alkylphenole im Mittel 1 bis 10, vorzugsweise 1 bis 3 Mol Ethylenoxid angelagert.

Das molare Verhältnis der Dialkylaminoalkanole a) bzw. des β-Hydroxyethylmorpholins zu den gesättigten oder ungesättigten aliphatischen Alkoholen oder alkoxylierten Alkylphenolen b) beträgt 1 : 9 bis 9 : 1, wobei ein Bereich von 1 : 3 bis 3 : 1 bevorzugt ist.

Für die Umesterung werden Polyacrylsäurealkylester, deren Alkylreste 1 bis 8 Kohlenstoffatome aufweisen, eingesetzt. Vorzugsweise verwendet man Alkylester, deren Alkylrest 1 bis 4 Kohlenstoffatome enthält. Besonders bevorzugt werden deshalb die Methyl-, Ethyl- oder n-Butylester der Polyacrylsäure für die Umesterung ausgewählt.

Die Umesterung der Polyacrylsäureester mit dem Gemisch aus Dialkylaminoalkoholen bzw. β-Hydroxyethylmorpholin und langkettigen aliphatischen Alkoholen bzw. alkoxylierten Alkylphenolen erfolgt in an sich bekannter Weise. Sie läuft zweckmäßig in Gegenwart eines an sich bekannten Umesterungskatalysators, wie z. B. Alkyltitanaten oder Alkalialkoholaten, ab und wird gegebenenfalls in Gegenwart eines Lösungsmittels, wie z. B. Toluol, Xylol oder Benzinfraktionen eines Siedebereiches von 80 bis 160°C durchgeführt. Das Lösungsmittel dient in erster Linie dazu, den bei der Umesterung freigesetzten Alkohol aus dem Reaktionsgemisch auszutragen. Dabei begrenzt das verwendete Lösungsmittel die Umesterungstemperaturen, die in einem Bereich von 70 bis 150°C liegen sollen.

Die Umesterungsreaktion soll dabei in solchen Mengenverhältnissen erfolgen, daß 5 bis 70 %, vorzugsweise 20 bis 70 %, insbesondere bevorzugt 30 bis 70 %, der Alkylester umgeestert werden.

Als Zwischenprodukt wird dabei der Polyacrylsäureester mit tertiären Aminogruppen erhalten. Diese Verbindungen können ebenfalls im Bereich der Textilhilfsmittel und der Metallhilfsmittel und für viele andere Zwecke eingesetzt werden.

In einem zweiten Verfahrensschritt wird das erhaltene Zwischenprodukt in ebenfalls bekannter Weise mit organischer Carbonsäure mit 1 bis 6 Kohlenstoffatomen oder anorganischen Säuren durch Protonierung in die Form des Ammoniumsalzes überführt.

Die organischen und anorganischen Säuren sollen bei entsprechendem Verwendungszweck physiologisch unbedenklich sein. Aus diesem Grunde sind Essigsäure oder Propionsäure als organische Säure und Phosphorsäure als anorganische Säure bevorzugt.

Innerhalb der erfindungsgemäßen Polyacrylsäureester mit Ammoniumsalzgruppen sind diejenigen bevorzugt, die durch Umesterung von Polyacrylsäuremethylestern mit einem Gemisch von Dimethyl- oder Diethylaminoethanol und aliphatischen Alkoholen einer Kettenlänge von 8 bis 22, vorzugsweise 10 bis 18 Kohlenstoffatomen oder alkoxylierten Alkylphenolen, wobei 20 bis 50 % der Estergruppen umgeestert werden, und nachfolgende Salzbildung erhältlich sind.

Besonders bevorzugt sind Polyacrylester mit Ammoniumsalzgruppen, bei denen die Polymeren ein mittleres Molekulargewicht von etwa 1000 bis 50 000 aufweisen.

Im Gegensatz zu den nach dem Stand der Technik durch Copolymerisation von Acrylsäureestern oder Acrylsäureesterderivaten mit Ammoniumsalzgruppen erhaltenen Copolymerisaten sind die erfindungsgemäßen Polymerisate polymer einheitlicher aufgebaut. Der Gehalt an niedermolekularen Anteilen ist ganz wesentlich vermindert. Die erfindungsgemäßen Copolymerisate haben keine toxischen oder sonstige physiologisch bedenklichen Eigenschaften.

Bis zu 50 % der Acrylsäurealkylester können durch die entsprechenden Methacrylsäurealkylester ersetzt sein.

Es ist dem Fachmann klar, daß die als Ausgangsverbindungen für die Umesterungsreaktion dienenden Polyacrylsäurealkylester auch andere Comonomere einpolymerisiert enthalten können, wie Styrol, Acrylamid, Acrylnitril oder Methacrylsäurealkylester.

Ein weiterer Gegenstand der Erfindung besteht in der Verwendung der Verbindungen als kationaktive Tenside, insbesondere als Emulgatoren in Metallhilfsmitteln, wie z.B. in Bohr- und Schneidölen, als Hilfsmittel in der Textilindustrie oder als Trennmittel für die Entformung von Kunststoffteilen, insbesondere von Polyurethanschaumstoffkörpern.

In den folgenden Beispielen werden Herstellung und Eigenschaften der erfindungsgemäßen Verbindungen näher erläutert.

Beispiel 1

Herstellung von Polymethylacrylat durch radikalische Polymerisation (nicht erfindungsgemäß)

Eine Lösung von 0,6 g Azodiisobuttersäurenitril und 20,2 g Dodecylmercaptan in 50 g Toluol und 280 g (ca. 3,25 Mol) Methylacrylat wird innerhalb von 2 h in einen mit 53 g Toluol gefüllten Reaktor gegeben; das vorgelegte Lösungsmittel hat dabei eine Temperatur von 100°C und befindet sich unter einer Stickstoffatmosphäre. Danach werden nochmal 0,9 g Azodiisobuttersäurenitril, gelöst in 20 g Methylethylketon, innerhalb von 0,5 h nachgegeben. Schließlich wird das Reaktionsgemisch noch für 1 h bei der gleichbleibenden Temperatur von 100°C weiter erwärmt. Nach Beendigung der Reaktion wird das Lösungsmittel abdestilliert. Es verbleibt eine farblose, viskose Flüssigkeit mit einem Brechungsindex von 1,4802. Aus der gelchromatographischen Untersuchung ergibt sich für das erhaltene Polymerisat ein numerisches Molekulargewicht $\overline{M}_n$ von 1950 und für das Gewichtsmittel des Molekulargewichtes $\overline{M}_w$ 3330; der Uneinheitlichkeitskoeffizient beträgt demnach 1,71. Der Restmonomerengehalt beträgt 0,1 %.

Beispiele 2 bis 5

Herstellung von Polymethylacrylaten unterschiedlicher Molekulargewichte durch radikalische Polymerisation (nicht erfindungsgemäß)

Es wird verfahren wie in Beispiel 1 mit der Ausnahme, daß der Gehalt an Dodecylmercaptan variiert wird. In Tabelle 1 wird die Abhängigkeit der Zahlen- und Gewichtsmittel des Mclekulargewichtes vom Gehalt an Dodecylmercaptan gezeigt.

Tabelle 1

| Polymethylacrylat aus Beispiel | Dodecylmercaptan [Gew.-%] | Molekulargewicht $\overline{M}_n$ | Molekulargewicht $\overline{M}_w$ | Uneinheitlichkeitskoeffizient |
|---|---|---|---|---|
| 2 | 20,10 | 663 | 955 | 1,44 |
| 3 | 13,42 | 941 | 1 435 | 1,53 |
| 4 | 2,95 | 4 453 | 11 346 | 2,55 |
| 5 | 0,43 | 16 750 | 68 500 | 4,09 |

Beispiel 6

Herstellung von Poly-n-butylacrylat durch radikalische Polymerisation (nicht erfindungsgemäß)

Es wird verfahren wie in Beispiel 3 mit dem Unterschied, daß anstelle von Methylacrylat n-Butylacrylat eingesetzt wird.

Aus der gelchromatographischen Untersuchung ergibt sich für das erhaltene Polymerisat ein numerisches Molekulargewicht $\overline{M}_n$ von 910 und für das Gewichtsmittel des Molekulargewichtes $\overline{M}_w$ 1450; der Uneinheitlichkeitskoeffizient beträgt demnach 1,59. Der Restmonomerengehalt wird zu < 0,1 % ermittelt.

Beispiel 7

Herstellung eines Methylacrylat-Methylmethacrylat-Copolymerisates durch radikalische Polymerisation (nicht erfindungsgemäß)

Es wird verfahren wie in Beispiel 1 mit der Ausnahme, daß anstelle einer Menge von 280 g (ca. 3,25 Mol) Methylacrylat 140 g (ca. 1,63 Mol) Methylacrylat und 140 g (ca. 1,4 Mol) Methylmethacrylat eingesetzt werden. Aus der gelchromatographischen Untersuchung ergibt sich für das erhaltene Polymerisat ein numerisches Molekulargewicht $\overline{M}_n$ von 2280 und für das Gewichtsmittel des Molekulargewichtes $\overline{M}_w$ 4390; der Uneinheitlichkeitskoeffizient beträgt demnach 1,93. Der Restmonomerengehalt wird zu etwa 0,15 % ermittelt.

Beispiel 8 A

Umesterung von Polymethylacrylat mit Diethylaminoethanol und Oleylalkohol

99,5 g des Polymethylacrylates aus Beispiel 3, gelöst in 100 g Toluol, werden zusammen mit 33,9 g (0,29 Mol) Diethylaminoethanol und 81,8 g (0,29 Mol) Oleylalkohol unter Stickstoff auf 120°C erhitzt. Zunächst werden möglicherweise vorhandene Spuren von Wasser durch azeotrope Destillation entfernt. Danach erfolgt die Zugabe von 0,4 g Natriummethylat als Umesterungskatalysator. Das bei der Umesterung entstehende Methanol wird durch Fraktionierung vom Toluol getrennt. Nach 2 h und nach 4 h werden jeweils 0,35 g Natriummethylat nachdosiert. Die Reaktion ist nach etwa 6 h beendet; ihr Ende wird durch eine Kopftemperatur von etwa 110°C angezeigt.

Der durch gaschromatographische Untersuchung ermittelte Anteil an Diethylaminoethanol von 0,28 % entspricht einem Umsatz bei der Umesterung von 97,8 %. Im Ansatz befinden sich noch 1,2 % Oleylalkohol, was einem Umsatz von 95,7 % entspricht; der Methanolgehalt im Destillat beträgt 31,1 %, entsprechend einem Umsatz von 93,9 %.

Beispiele 9 A bis 31 A

Umesterung von Polyalkylacrylaten bzw. von Methylacrylat-Methylmethacrylat-Copolymerisat unterschiedlichen Molekulargewichtes mit verschiedenen Dialkylaminoalkanolen und Fettalkoholen

Es wird grundsätzlich verfahren wie in Beispiel 8 A mit der Ausnahme, daß unterschiedliche Dialkylaminoalkanole und Fettalkohole in, hinsichtlich der Alkylestergruppen, wechselnden molaren Verhältnissen verwendet werden. Anstelle von Polymethylacrylat werden in einigen Fällen Poly-n-butylacrylat bzw. Methylacrylat-Methylmethacrylat-Copolymerisat als makromolekulare Umesterungskomponente und anstelle von Isopropyltitanat in einigen Fällen Natriummethylat als Umesterungskatalysator verwendet. In Tabelle 2 werden Art bzw. Beispiel-Nr. und Menge des eingesetzten Polymers, Art und Menge des Fettalkohols, Art und Menge des Dialkylaminoalkanols bzw. β-Hydroxyethylmorpholins, Art und Menge des Katalysators, der Substitutionsgrad der Theorie als Quotient der Zahl der theoretisch substituierten Estergruppen und der Zahl der ursprünglich vorhandenen Estergruppen und die Umesterungsausbeute aus der freigesetzten Menge an Methanol als Prozentsatz der Zahl der praktisch zur Zahl der theoretisch substituierten Estergruppen angegeben.

Tabelle 2

| Beispiel Nr. | Polyacrylat Beispiel Nr. | Polyacrylat Menge [ g ] | Fettalkohol Art | Fettalkohol Menge [Mol] | Fettalkohol Menge [ g ] | Dialkylaminoalkohol Art | Dialkylaminoalkohol Menge [Mol] | Dialkylaminoalkohol Menge [ g ] | Katalysator Art | Katalysator Menge [ g ] | Substitutionsgrad d.Th. | Ausbeute [ % ] |
|---|---|---|---|---|---|---|---|---|---|---|---|---|
| 9 A | 2 | 107,9 | OLA | 0,29 | 81,8 | DEAE | 0,29 | 33,9 | IPT | 1,8 | 0,58 | 99,0 |
| 10 A | 3 | 99,5 | OLA | 0,25 | 70,8 | DEAB | 0,25 | 36,3 | IPT | 2,0 | 0,50 | 98,0 |
| 11 A | 3 | 99,5 | OLA | 0,29 | 81,8 | DEAE | 0,29 | 33,9 | IPT | 2,1 | 0,58 | 98,3 |
| 12 A | 3 | 99,5 | OLA | 0,17 | 47,4 | DEAE | 0,41 | 48,1 | IPT | 1,7 | 0,58 | 95,6 |
| 13 A | 3 | 99,5 | OLA | 0,31 | 88,4 | DEAE | 0,27 | 31,1 | IPT | 1,9 | 0,58 | 98,0 |
| 14 A | 3 | 99,5 | OLA | 0,25 | 69,5 | DEAE | 0,33 | 38,9 | IPT | 1,7 | 0,58 | 97,9 |
| 15 A | 3 | 99,5 | OLA | 0,31 | 88,3 | DEAE | 0,27 | 31,1 | IPT | 2,0 | 0,58 | 98,2 |
| 16 A | 3 | 99,5 | OLA | 0,27 | 75,1 | DEAE | 0,31 | 36,6 | IPT | 1,9 | 0,58 | 98,5 |
| 17 A | 3 | 99,5 | TFA | 0,20 | 52,0 | DEAE | 0,20 | 23,4 | IPT | 1,8 | 0,40 | 98,2 |
| 18 A | 3 | 99,5 | BHA | 0,15 | 47,5 | DEAE | 0,20 | 23,4 | IPT | 2,0 | 0,35 | 97,6 |
| 19 A | 3 | 99,5 | OLA | 0,29 | 81,8 | DMADG | 0,29 | 38,5 | IPT | 2,2 | 0,58 | 97,7 |
| 20 A | 1 | 92,3 | DNPHE | 0,05 | 62,4 | DMAE | 0,40 | 35,6 | $NaOCH_3$ | 1,2 | 0,45 | 98,3 |
| 21 A | 1 | 92,3 | OLA | 0,27 | 75,9 | DEAE | 0,27 | 31,4 | IPT | 2,0 | 0,54 | 98,0 |
| 22 A | 1 | 92,3 | OLA | 0,43 | 121,4 | DEAE | 0,11 | 12,5 | IPT | 2,3 | 0,54 | 96,9 |
| 23 A | 1 | 92,3 | OLA | 0,16 | 44,0 | DEAE | 0,38 | 44,6 | IPT | 1,5 | 0,54 | 97,8 |

Tabelle 2 - Fortsetzung

| Beispiel | Polyacrylat | | Fettalkohol | | | Dialkylaminoalkohol | | | Katalysator | | Substitutionsgrad | Ausbeute |
|---|---|---|---|---|---|---|---|---|---|---|---|---|
| Nr. | Beispiel Nr. | Menge [g] | Art | Menge [Mol] | Menge [g] | Art | Menge [Mol] | Menge [g] | Art | Menge [g] | d.Th. | [%] |
| 24 A | 1 | 92,3 | OCA | 0,47 | 60,6 | DMAE | 0,05 | 4,45 | $NaOCH_3$ | 1,1 | 0,52 | 97,4 |
| 25 A | 4 | 88,7 | OCA | 0,48 | 62,3 | DEAE | 0,22 | 25,8 | IPT | 1,6 | 0,70 | 96,9 |
| 26 A | 4 | 88,7 | NPHE | 0,13 | 60,4 | DEAE | 0,21 | 25,0 | IPT | 1,7 | 0,34 | 98,5 |
| 27 A | 4 | 88,7 | BHA | 0,06 | 19,0 | DMAE | 0,54 | 48,1 | $NaOCH_3$ | 1,2 | 0,60 | 95,7 |
| 28 A | 5 | 86,7 | OLA | 0,25 | 70,8 | DEAE | 0,25 | 29,3 | IPT | 2,1 | 0,50 | 95,2 |
| 29 A | 3 | 99,5 | OLA | 0,25 | 70,8 | HEMO | 0,25 | 32,7 | IPT | 2,1 | 0,50 | 94,2 |
| 30 A | 1 | 92,3 | OLA | 0,27 | 75,9 | DMAB | 0,27 | 31,6 | IPT | 2,0 | 0,50 | 96,5 |
| 31 A | 7 | 184,6 | OLA | 0,13 | 70,8 | DEAE | 0,13 | 15,2 | IPT | 2,5 | 0,25 | 94,8 |

Legende:

BHA = Behenylalkohol
DEAB = Diethylaminobutanol
DEAE = Diethylaminoethanol
DMADG = Dimethylaminodiglykol
DMAE = Dimethylaminoethanol
DNPHE = Dinonylphenolethoxylat (25 Mol EO)
IPT = Isopropyltitanat
NPHE = Nonylphenolethoxylat (3 Mol EO)
OCA = Octylalkohol
OLA = Oleylalkohol
TFA = Talgfettalkohol
HEMO = β-Hydroxyethylmorpholin
DMAB = 4-Dimethylaminobutanol-1

$$\text{Substitutionsgrad d. Th.} = \frac{\text{Zahl der theoretisch substituierten Estergruppen}}{\text{Zahl der ursprünglich vorhandenen Estergruppen}}$$

$$\text{Ausbeute } [\%] = \frac{\text{Zahl der praktisch substituierten Estergruppen *}}{\text{Zahl der theoretisch substituierten Estergruppen}} \cdot 100$$

* bestimmt aus der Menge an freigesetztem Methanol

Beispiel 8 B

Protonierung eines Umesterungsproduktes aus Polymethylacrylat, Diethylaminoethanol und Oleylalkohol

178 g des gemäß Beispiel 8 A erhaltenen, in 70 g Toluol gelösten Produktes werden durch Destillation bei 95°C und 15 Torr vom Lösungsmittel befreit. Danach werden 17,6 g (= 95 Mol-% bezogen auf tertiären Stickstoff) Propionsäure zugegeben und innerhalb von 1 h verrührt. Der anschließend ermittelte pH-Wert einer 10 %igen wäßrigen Lösung beträgt 5,1.

Beispiele 9 B bis 38 B

Protonierung verschiedener Umesterungsprodukte mit unterschiedlichen Carbonsäuren bzw. anorganischen Säuren

Es wird grundsätzlich verfahren wie in Beispiel 8 A mit der Ausnahme, daß die verschiedenartigen Umesterungsprodukte aus den Beispielen 8 A bis 30 A mit unterschiedlichen Carbonsäuren bzw. anorganischen Säuren umgesetzt werden. In Tabelle 3 wird das eingesetzte Umesterungsprodukt, die Art der Säure und die Menge in Mol-%, bezogen auf die tertiäre Stickstoffgruppe, sowie der resultierende pH-Wert angegeben.

Tabelle 3

| Beispiel Nr. | Umesterungsprodukt aus Beispiel Nr. | Säure Art | Säure Menge [Mol-%] | pH-Wert * |
|---|---|---|---|---|
| 8 B | 8 A | PS | 95 | 5,1 |
| 9 B | 8 A | PS | 80 | 5,2 |
| 10 B | 8 A | PS | 100 | 5,0 |
| 11 B | 9 A | PS | 80 | 5,2 |
| 12 B | 10 A | PS | 80 | 5,2 |
| 13 B | 11 A | ES | 80 | 5,0 |
| 14 B | 11 A | PHS | 80 | 3,1 |
| 15 B | 11 A | OES | 80 | 8,8 |
| 16 B | 11 A | OES/PHS 1:1 | 80 | 5,7 |
| 17 B | 11 A | STS | 80 | 8,5 |
| 18 B | 11 A | BS | 80 | 5,5 |
| 19 B | 11 A | EHS | 95 | 5,8 |
| 20 B | 12 A | PS | 95 | 5,1 |
| 21 B | 13 A | EHS | 95 | 5,7 |
| 22 B | 14 A | EHS | 95 | 6,1 |
| 23 B | 15 A | PS | 90 | 5,3 |
| 24 B | 16 A | PS | 95 | 5,1 |
| 25 B | 17 A | PS | 80 | 5,4 |
| 26 B | 18 A | PS | 80 | 5,3 |
| 27 B | 19 A | PS | 80 | 5,2 |
| 28 B | 20 A | PS | 80 | 5,5 |
| 29 B | 21 A | PS | 95 | 5,0 |
| 30 B | 22 A | PS | 95 | 5,1 |
| 31 B | 23 A | PS | 95 | 5,2 |
| 32 B | 24 A | PHS | 80 | 3,7 |
| 33 B | 25 A | PS | 80 | 5,4 |
| 34 B | 26 A | PS | 80 | 5,2 |
| 35 B | 27 A | EHS | 95 | 5,9 |
| 36 B | 28 A | PS | 80 | 5,2 |
| 37 B | 29 A | PS | 80 | 5,3 |
| 38 B | 30 A | PS | 80 | 5,4 |

* pH-Wert der 10 %igen wäßrigen Lösung

Legende:

BS = Benzoesäure
EHS = 2-Ethylhexansäure
ES = Essigsäure
OES = Ölsäure
PHS = Phosphorsäure
PS = Propionsäure
STS = Stearinsäure

Beispiel 39

Herstellung eines Ammonium- und Fettalkoholgruppen enthaltenden Copolymerisates durch radikalische Polymerisation (nicht erfindungsgemäß)

Eine Lösung von 0,6 g Azodiisobuttersäurenitril und 20,2 g Dodecylmercaptan in 72,2 g (ca. 0,84 Mol) Methylacrylat, 71,8 g (ca. 0,42 Mol) Diethylaminoethylacrylat und 135,8 g (0,42 Mol) Stearylacrylat, gelöst in 50 g Toluol, werden innerhalb von 2 h in einen mit 53 g Toluol gefüllten Reaktor gegeben; das vorgelegte Lösungsmittel hat dabei eine Temperatur von 100°C und befindet sich unter einer Stickstoffatmosphäre. Danach werden nochmals 0,9 g Azodiisobuttersäurenitril in 20 g Methylethylketon innerhalb von 0,5 h nachgegeben und schließlich das Reaktionsgemisch für 1 h bei der gleichbleibenden Temperatur von 100°C weiter erwärmt. Nach Beendigung der Reaktion werden Lösungsmittel und nicht umgesetzte Monomere durch Destillation im Vakuum entfernt.

Aus der gelchromatographischen Untersuchung ergibt sich für das erhaltene Polymerisat ein numerisches Molekulargewicht $\overline{M}_n$ von 1370 und für das Gewichtsmittel des Molekulargewichtes $\overline{M}_w$ 3150; der Uneinheitlichkeitskoeffizient beträgt demnach 2,3. Der Restmonomerengehalt nach der Vakuumdestillation wird zu 0,1 % ermittelt. Im Gelphasenchromatogramm zeigt sich im niedermolekularen Bereich ein Peak, der auf die Gegenwart niedermolekularer Anteile hinweist. Das erhaltene Produkt wird wie in Beispiel 8 B mit 95 Mol-% (bezogen auf tertiäre Aminogruppen) Propionsäure umgesetzt.

Anwendungstechnische Untersuchung

Die anwendungstechnische Prüfung der erfindungsgemäßen Umesterungsprodukte erfolgte im Hinblick auf ihr Verhalten als Emulgator für Wasser/Öl- bzw. Wachsemulsionen

Beispiel I

Zur Herstellung der Emulsion werden 500 ml Wasser in einem 1000-cm³-Glasgefäß vorgelegt und auf 90°C erwärmt. Parallel dazu werden 30 g eines Paraffinöls mit einer Viskosität von 200 cps mit 9,5 g des Produktes aus Beispiel 9 B vermischt und die erhaltene Mischung ebenfalls auf 90°C erwärmt. Die Herstellung einer Emulsion geschieht durch Zutropfen des Paraffinöl-Emulgator-Gemisches zur Vorlage mit Wasser unter scherkraftreichem Rühren mit einer Dispergierscheibe. Nach Beendigung der Zugabe wird die gebildete Emulsion unter fortgesetztem Rühren sehr rasch auf Raumtemperatur abgekühlt (Schockkühlung).

Beispiele II bis XX und V1 bis V5

Gemäß Beispiel I werden verschiedene Öle bzw. Wachse mit unterschiedlichen Umesterungsprodukten in Emulsionen überführt. Einige Emulsionen werden unter gleichzeitiger Verwendung eines nichtionischen Emulgators vom Typ eines ethoxylierten Fettalkohols (Stearylalkohol mit 2 Mol Ethylenoxid) hergestellt, wobei anstelle von 9,5 g des erfindungsgemäßen Emulgators ein Gemisch von 4 g dieses Emulgators mit 5,5 g nichtionischem Coemulgator eingesetzt wird.

Im Vergleichsversuch wird Dimethylstearylammoniumpropionat als Emulgator des Standes der Technik sowie das Produkt (Copolymerisat) gemäß Beispiel 39 geprüft.

In der nachfolgenden Tabelle 4 werden die verwendeten Emulgatoren bzw. Coemulgatoren, das emulgierte Öl, die Teilchengröße der dispersen Phase, die Stabilität und der Befund im Hautreizungstest beschrieben.

Mit allen verwendeten Emulgatoren können stabile Emulsionen erzeugt werden. Bei der Bestimmung der Teilchengrößenverteilung zeigt sich, daß 90 % der Teilchen einen Durchmesser von < 8 mμ aufweisen. Die ermittelte Teilchengrößenverteilung deutet auf eine gute Emulsionsstabilität vor allem der mit den erfindungsgemäßen Emulgatoren erhaltenen Emulsionen hin.

Der wesentliche Vorteil, den die erfindungsgemäßen Emulgatoren gegenüber den Produkten des Standes der Technik bieten, besteht jedoch darin, daß beim Hautkontakt keine Reizungen oder Irritationen beobachtet werden. Die Hautreiztests sind bei Verwendung der erfindungsgemäßen Umesterungsprodukte ohne Befund. Bei Produkten des Standes der Technik werden demgegenüber in einigen Fällen erhebliche Irritationen bzw. Reizungen beobachtet.

Tabelle 4

| Anwendungstechnisches Beispiel Nr. | Emulgator aus Beispiel Nr. | Co-Emulgator | Emulgiertes Öl | Stabilität der Emulsion | Teilchengröße < 8 mµ [ % ] | Hautreizungstest |
|---|---|---|---|---|---|---|
| I | 9 B | - | PAR | i.O. | 98,1 | o.B. |
| II | 9 B | STA/ZEO | PAR | i.O. | 99,9 | o.B. |
| III | 9 B | - | GLYTO | i.O. | 100,0 | o.B. |
| IV | 9 B | STA/ZEO | GLYTO | i.O. | 100,0 | o.B. |
| V | 9 B | STA/ZEO | PBD | i.O. | 99,0 | o.B. |
| VI | 9 B | - | KSL | i.O. | 100,0 | o.B. |
| VII | 9 B | STA/ZEO | KSL | i.O. | 99,5 | o.B. |
| VIII | 23 B | - | GLYTO | i.O. | 90,2 | o.B. |
| IX | 24 B | - | GLYTO | i.O. | 95,1 | o.B. |
| X | 14 B | - | GLYTO | i.O. | 99,8 | o.B. |
| XI | 33 B | - | GLYTO | i.O. | 90,5 | o.B. |
| XII | 12 B | - | GLYTO | i.O. | 100,0 | o.B. |
| XIII | 13 B | - | GLYTO | i.O. | 99,9 | o.B. |
| XIV | 15 B | - | GLYTO | i.O. | 91,5 | o.B. |
| XV | 16 B | - | GLYTO | i.O. | 100,0 | o.B. |
| XVI | 18 B | - | GLYTO | i.O. | 99,7 | o.B. |

Tabelle 4 - Fortsetzung

| Anwendungstechnisches Beispiel Nr. | Emulgator aus Beispiel Nr. | Co-Emulgator | Emulgiertes Öl | Stabilität der Emulsion | Teilchengröße < 8 mµ [%] | Hautreizungstest |
|---|---|---|---|---|---|---|
| XVII | 28 B | - | GLYTO | i.O. | 96,7 | o.B. |
| XVIII | 34 B | - | GLYTO | i.O. | 99,2 | o.B. |
| XIX | 36 B | - | GLYTO | i.O. | 92,5 | o.B. |
| XX | 25 B | - | GLYTO | i.O. | 99,3 | o.B. |
| V1 | 39 | - | GLYTO | i.O. | 96,7 | L.I. |
| V2 | DMSAP | STA/ZEO | PAR | i.O. | 96,9 | I. |
| V3 | DMSAP | STA/ZEO | PBD | i.O. | 96,8 | E.R. |
| V4 | DMSAP | STA/ZEO | KSL | i.O. | 90,3 | E.R. |
| V5 | DMSAP | STA/ZEO | GLYTO | i.O. | 100,0 | R. |

Legende:

| | | |
|---|---|---|
| STA/ZEO | = | Stearylalkoholdiglykol |
| DMSAP | = | Dimethylstearylammoniumpropionat |
| PAR | = | Paraffinöl, 200 cps |
| GLYTO | = | Glycerintrioleat |
| PBD | = | Polybutadien, flüssig M = 1800 |
| KSL | = | Esterwachs KSL |
| o.B. | = | ohne Befund |
| L.I. | = | leichte Irritation |
| I. | = | Irritation |
| R. | = | Reizung |
| E.R. | = | erhebliche Reizung |

## Patentansprüche

1. Polyacrylsäureester mit Ammoniumsalzgruppen, erhältlich durch Umesterung von durch radikalische Polymerisation erhaltenen Polyacrylsäurealkylestern, deren Alkylreste 1 bis 8 Kohlenstoffatome aufweisen, wobei bis zu 50 % der Acrylsäureester durch die entsprechenden Methacrylsäureester ersetzt sein können, mit

   a) Verbindungen der allgemeinen Formel

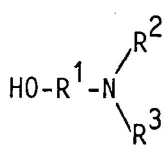

oder

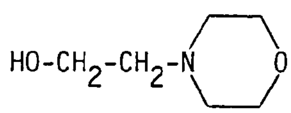

| | |
|---|---|
| $R^1$ = | zweiwertiger Rest der allgemeinen Formel $-(CH_2)_q-$, |

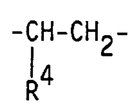

| | |
|---|---|
| | oder $-(C_nH_{2n}O)_m-C_pH_{2p}-$ |
| $R^4$ = | Alkylrest mit 1 bis 16 Kohlenstoffatomen, |
| q | = 2, 3 oder 4, |
| n | = 2, 3 oder 4, |
| m | = 1 bis 20, |
| p | = 2, 3 oder 4, |
| $R^2$, $R^3$ = | jeweils Alkylrest mit 1 bis 18 Kohlenstoffatomen, |

   und

   b) gesättigten oder ungesättigten aliphatischen Alkoholen mit 8 bis 22 Kohlenstoffatomen oder alkoxylierten Alkylphenolen mit 9 bis 27 Kohlenstoffatomen im Alkylphenolrest,

   wobei das molare Verhältnis der Komponenten a) : b) 1 : 9 bis 9 : 1 beträgt,
   in solchen Mengen, daß 5 bis 70 % der Estergruppen umgeestert werden, in Gegenwart eines an sich bekannten Umesterungskatalysators, bei Temperaturen von 70 bis 140°C, gegebenenfalls in Gegenwart

eines Lösungsmittels, und nachfolgende Salzbildung mit organischen Carbonsäuren mit 1 bis 6 Kohlenstoffatomen oder anorganischen Säuren.

2. Polyacrylsäureester nach Anspruch 1, erhältlich durch Umesterung von Polyacrylsäurealkylestern mit einem Gemisch von a) Dialkylaminoalkanolen und b) aliphatischen Alkoholen einer Kettenlänge von 8 bis 22, vorzugsweise 10 bis 18 Kohlenstoffatomen oder alkoxylierten Alkylphenolen in solchen Mengen, daß 20 bis 70 %, vorzugsweise 30 bis 70 % der Estergruppen umgeestert werden, und anschließende Salzbildung.

3. Polyacrylsäureester nach Anspruch 1 oder 2, erhältlich durch Umesterung von Polyacrylsäurealkylestern mit einem Gemisch von a) Dialkylaminoalkanolen und b) aliphatischen Alkoholen oder alkoxylierten Alkylphenolen, wobei das molare Verhältnis der Komponenten a) : b) gleich 1 : 3 bis 3 : 1 ist, und nachfolgende Salzbildung.

4. Polyacrylsäureester nach Anspruch 1, 2 oder 3, dadurch gekennzeichnet, daß als alkoxylierte Alkylphenole solche mit im Mittel 1 bis 10, insbesondere 1 bis 3 Oxyethylengruppen, verwendet werden.

5. Polyacrylsäureester nach Anspruch 1, 2, 3 oder 4 mit einem mittleren Molekulargewicht von 1000 bis 50 000.

6. Polyacrylsäureester nach Anspruch 1, 2, 3, 4 oder 5, erhältlich durch Salzbildung mit aliphatischen Carbonsäuren mit 1 bis 6 Kohlenstoffatomen oder Phosphorsäure.

7. Verwendung der Ammoniumsalzgruppen aufweisenden Polyacrylsäureester nach einem oder mehreren der vorhergehenden Ansprüche 1 bis 6 als kationaktive Tenside, insbesondere als Wirkstoffe in Metallhilfsmitteln.

## Claims

1. Polyacrylic acid esters with ammonium salt groups, obtainable by transesterification of polyacrylic acid alkyl esters which are obtained by free-radical polymerization, the alkyl radicals of which contain 1 to 8 carbon atoms, it being possible for up to 50% of the acrylic acid ester to be replaced by the corresponding methacrylic ester, with
   a) compounds of the general formula

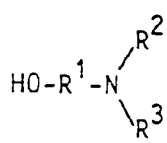

or

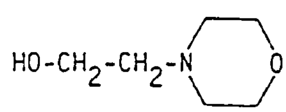

$R^1$ = a divalent radical of the general formula

$-(CH_2)_q-$,

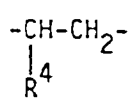

or $-(C_nH_{2n}O)_m-C_pH_{2p}-$

$R^4$ = an alkyl radical having 1 to 16 carbon atoms,
q = 2, 3 or 4,
n = 2, 3 or 4,
m = 1 to 20,
p = 2, 3 or 4,
$R^2$, $R^3$ = in each case an alkyl radical having 1 to 18 carbon atoms, and

b) saturated or unsaturated aliphatic alcohols having 8 to 22 carbon atoms or alkoxylated alkylphenols having 9 to 27 carbon atoms in the alkylphenol radical,

the molar ratio of components a):b) being 1:9 to 9:1, in amounts such that 5 to 70% of the ester groups are transesterified, in the presence of a transesterification catalyst which is known per se, at temperatures of 70 to 140°C, if appropriate in the presence of a solvent, and subsequent salt formation with organic carboxylic acids having 1 to 6 carbon atoms or inorganic acids.

2. Polyacrylic acid esters according to Claim 1, obtainable by transesterification of polyacrylic acid alkyl esters with a mixture of a) dialkylaminoalkanols and b) aliphatic alcohols having a chain length of 8 to 22, preferably 10 to 18, carbon atoms or alkoxylated alkylphenols in amounts such that 20 to 70%, preferably 30 to 70%, of the ester groups are transesterified, and subsequent salt formation.

3. Polyacrylic acid esters according to Claim 1 or 2, obtainable by transesterification of polyacrylic acid alkyl esters with a mixture of a) dialkylaminoalkanols and b) aliphatic alcohols or alkoxylated alkylphenols, the molar ratio of components a):b) being 1:3 to 3:1, and subsequent salt formation.

4. Polyacrylic acid esters according to Claim 1, 2 or 3, characterized in that the alkoxylated alkylphenols used are those having on average 1 to 10, in particular 1 to 3, oxyethylene groups.

5. Polyacrylic acid esters according to Claim 1, 2, 3 or 4, having an average molecular weight of 1,000 to 50,000.

6. Polyacrylic acid esters according to Claim 1, 2, 3, 4 or 5, obtainable by salt formation with aliphatic carboxylic acids having 1 to 6 carbon atoms or phosphoric acid.

7. Use of the polyacrylic acid esters containing ammonium salt groups according to one or more of the preceding Claims 1 to 6 as cationic surfactants, in particular as active compounds in metal auxiliaries.

## Revendications

1. Polyesters acryliques contenant des groupes de sel d'ammonium, que l'on peut obtenir par transestérification de polyacrylates d'alkyle obtenus par polymérisation radicalaire, dont les restes alkyles comportent de 1 à 8 atomes de carbone, jusqu'à 50 % des esters acryliques pouvant être remplacés par les esters méthacryliques correspondants, avec

   a) des composés de formule générale

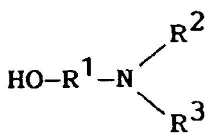

ou

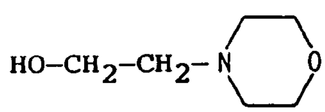

| | | |
|---|---|---|
| $R^1$ = | un reste bivalent de formule générale $-(CH_2)_q-$, | |

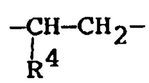

ou $-(C_nH_{2n}O)_m-C_pH_{2p}-$

| | |
|---|---|
| $R^4$ | = un reste alkyle ayant de 1 à 16 atomes de carbone, |
| q | = 2, 3 ou 4, |
| n | = 2, 3 ou 4, |
| m | = 1 à 20, |
| p | = 2, 3 ou 4, |
| $R^2$, $R^3$ = | chacun un reste alkyle ayant de 1 à 18 atomes de carbone, |

et

   b) des alcools aliphatiques saturés ou non saturés ayant de 8 à 22 atomes de carbone ou des alkylphénols alcoxylés ayant de 9 à 27 atomes de carbone dans le reste alkylphénol,

le rapport molaire des composants a) : b) valant de 1 : 9 à 9 : 1,

en quantités telles que 5 à 70 % des groupes esters sont transestérifiés, en présence d'un catalyseur connu de transestérification, à des températures de 70 à 140°C, éventuellement en présence d'un solvant, et formation subséquente de sels avec des acides carboxyliques organiques ayant de 1 à 6 atomes de carbone ou avec des acides minéraux.

**2.** Polyesters acryliques selon la revendication 1, que l'on peut obtenir par transestérification de polyacrylates d'alkyle avec un mélange de : a) des dialkylaminoalcanols et b) des alcools aliphatiques ayant une longueur de chaîne de 8 à 22, de préférence de 10 à 18 atomes de carbone, ou des alkylphénols alcoxylés, en quantités telles que 20 à 70 %, de préférence 30 à 70 % des groupes esters sont transestérifiés, et formation subséquente de sels.

**3.** Polyesters acryliques selon la revendication 1 ou 2, que l'on peut obtenir par transestérification de polyacrylates d'alkyle avec un mélange de : a) des dialkylaminoalcanols et b) des alcools aliphatiques ou des alkylphénols alcoxylés, le rapport molaire des composants a):b) valant de 1 : 3 à 3 : 1, et formation subséquente de sels.

**4.** Polyesters acryliques selon la revendication 1, 2 ou 3, caractérisés en ce qu'on utilise, comme alkylphénols alcoxylés, ceux qui ont en moyenne de 1 à 10, en particulier de 1 à 3 groupes d'oxyéthylène.

**5.** Polyesters acryliques selon la revendication 1, 2, 3 ou 4, ayant un poids moléculaire moyen de 1 000 à 50 000.

**6.** Polyesters acryliques selon la revendication 1, 2, 3, 4 ou 5, que l'on peut obtenir par formation de sels avec des acides carboxyliques aliphatiques ayant de 1 à 6 atomes de carbone ou avec l'acide phosphorique.

**7.** Utilisation des polyesters acryliques contenant des groupes de sel d'ammonium selon une ou plusieurs des revendications 1 à 6 précédentes, comme agents tensio-actifs cationiques, en particulier comme substances actives dans des agents auxiliaires pour des métaux.